# FASCICULE DE BREVET EUROPEEN

(11) **EP 4 368 845 B1**
(45) Date de publication et mention de la délivrance du brevet: **23.09.2026**
(21) Numéro de dépôt: 24164968.0
(22) Date de dépôt: 03.07.2019
(51) Int. Cl.: F16C 17/18, F16C 33/04, F16C 11/04, F16C 33/10

(54) **COMPOSANT ARTICULÉ, ET SYSTÈME MÉCANIQUE COMPRENANT UN TEL COMPOSANT**
GELENKKOMPONENTE UND SOLCHE ENTHALTENDES MECHANISCHES SYSTEM
ARTICULATED COMPONENT AND MECHANICAL SYSTEM COMPRISING SUCH A COMPONENT

(30) Priorité: 10.07.2018 FR 1856323
(43) Date de publication de la demande: 15.05.2024
(62) Numéro(s) de document de la (des) demande(s) initiale(s) en application de l'article 76 CBE: 23176206.3 / 4 219 967; 19756420.6 / 3 794 241
(73) Titulaire: HYDROMECANIQUE ET FROTTEMENT, 42160 Andrézieux-Bouthéon (FR)
(72) Inventeur: PROST, Fabrice, 42000 SAINT-ETIENNE (FR); PAVAILLER, Pierrick, 42120 PERREUX (FR)
(74) Mandataire: Ipsilon

(56) Documents cités:
- EP-A2- 0 856 673
- DE-A1- 102014 116 679
- US-A1- 2016 032 561

## Description

### DOMAINE TECHNIQUE

La présente invention concerne un composant articulé, comprenant au moins deux bagues concentriques mobiles l'une par rapport à l'autre et définissant une interface de frottement entre elles. L'invention concerne également un système mécanique comprenant un tel composant.

Le domaine de l'invention est celui des organes de guidage assurant une fonction de guidage en translation ou en rotation, en mouvement continu ou alternatif.

### ART ANTERIEUR

De manière classique, un tel organe de guidage est constitué par une bague, conçue pour le montage avec capacité d'articulation et/ou de coulissement d'un élément tel qu'un axe ou un arbre, comme décrit par exemple dans le document DE 10 2014 116 679 A1.

En pratique, de tels systèmes mécaniques sont soumis à d'importantes sollicitations en service : pression élevée, corrosion, abrasion, chocs. Pour améliorer leur durée de vie, un graissage est prévu entre la bague et l'axe.

La bague peut être munie d'agencements faisant office de réserve de graisse, comme décrit par exemple dans les documents EP0987456, WO2014091123 et WO2014091124 au nom de la Demanderesse.

Lorsque le système mécanique est en service, la graisse sort progressivement des agencements pour venir lubrifier l'interface de frottement entre la bague et l'axe. Ainsi, les agencements permettent de réaliser un graissage uniquement au montage, ou bien avec des espacements temporels de graissage très importants.

La Demanderesse dispose d'une grande expertise dans le domaine des organes de guidage, et cherche continuellement à améliorer les systèmes existants.

### EXPOSE DE L'INVENTION

Le but de la présente invention est de proposer un composant articulé amélioré, présentant notamment une excellente résistance à l'usure et au grippage, et une durée de vie améliorée en service.

A cet effet, l'invention a pour objet un composant articulé à un degré de liberté, comprenant au moins deux bagues concentriques, mobiles en rotation l'une par rapport à l'autre autour d'un axe central, définissant une interface de frottement entre elles, et incluant : une bague externe ayant une surface de frottement interne, et une bague interne ayant une surface de frottement externe et une surface de frottement interne prévue pour recevoir un élément mobile guidé par le composant en rotation, oscillation et/ou translation.

Ainsi, l'invention permet de proposer un composant résistant, peu encombrant et simple à mettre en œuvre. Le composant présente une durée de vie améliorée, en comparaison avec un composant qui est constitué d'une unique bague, et qui présente des dimensions et un encombrement similaires.

Le composant présente trois surfaces de frottement, formant trois surfaces d'usure. En comparaison avec un composant constitué d'une unique bague comportant une unique surface de frottement interne, la durée de vie en service du composant selon l'invention devrait être multipliée par trois. De manière surprenante, les expérimentations ont montré que sa durée de vie était multipliée au moins par cinq.

Dans le cas d'une unique bague d'articulation, l'usure est généralement localisée sur un secteur angulaire s'étendant sur 1/3 de la circonférence. Dans le cas de l'invention, la bague interne tourne par rapport à la bague externe, ce qui augmente fortement la surface d'usure potentielle, et donc la durée de vie du composant.

En pratique, on constate que l'interface de frottement entre les deux bagues est sollicitée en priorité. Les surfaces de frottement en regard remplissent la fonction de surfaces d'usure principales. Lorsque cette interface est grippée, la surface de frottement interne de la bague interne prend le relai comme surface d'usure.

De manière avantageuse, le composant présente trois surfaces de frottement pouvant être pourvues d'un traitement ou revêtement de surface et/ou d'agencements aptes à faire office de réserve de lubrifiant. Ainsi, l'invention offre une plus grande maîtrise dans la conception du composant, permettant d'adapter sa résistance à l'usure à chaque application.

**Selon d'autres** caractéristiques avantageuses de l'invention, prises isolément ou en combinaison :
- Les surfaces de frottement délimitant l'interface de frottement sont cylindriques.
- Les surfaces de frottement délimitant l'interface de frottement sont légèrement bombées. Le rayon de courbure absolu de chaque surface de frottement est strictement supérieur au rayon de l'interface de frottement considérée.
- L'interface de frottement entre les bagues reçoit un lubrifiant. Le composant comprend des moyens d'étanchéité conçus pour empêcher des fuites de lubrifiant hors de l'interface de frottement.
- Le lubrifiant est de la graisse.
- Le composant comprend des éléments latéraux limitant le débattement axial et angulaire de la bague interne par rapport à la bague externe.
- Les moyens d'étanchéité comprennent une flasque sur un premier côté de l'interface de frottement, et un épaulement sur un deuxième côté de l'interface de frottement.
- Les moyens d'étanchéité comprennent une flasque sur chaque côté de l'interface de frottement.
- Les moyens d'étanchéité comprennent une rondelle interposée entre la bague interne d'une part, et la flasque ou l'épaulement d'autre part, sur chaque côté de l'interface de frottement.
- La rondelle est en PTFE.
- Au moins l'une des surfaces de frottement comporte un traitement ou revêtement de surface présentant des propriétés physiques différentes du matériau de base de la bague.
- Le traitement ou revêtement de surface est multicouche ou monocouche.
- Le revêtement est réalisé par dépôt physique en phase vapeur (PVD en anglais : « physical vapor deposition »).
- Le revêtement est réalisé par dépôt chimique en phase vapeur (CVD en anglais : « chemical vapor deposition »).
- Le revêtement est réalisé par projection à chaud.
- Le revêtement est réalisé par projection à froid.
- Le revêtement est projeté sous forme de poudre.
- Le revêtement est projeté sous forme de gouttes.
- Le revêtement est réalisé par projection thermique par flamme supersonique (HVOF en anglais : « High Velocity Oxy-Fuel »).
- Le revêtement est réalisé par chargement laser (« laser cladding » en anglais).
- Le revêtement est anti-grippage.
- Le revêtement comprend une couche externe de carbone amorphe type DLC (« diamond-like carbon » en anglais), notamment avec une épaisseur comprise entre 1 et 5 µm, par exemple 3 µm.
- Le revêtement comprend une couche externe en composite autolubrifiant, notamment à base de résine et/ou de renfort tissé ou non, comprenant par exemple des charges de type PTFE, MoS2 ou graphite.
- Le revêtement comprend un verni polymère.
- Le traitement est une nitruration, et la surface de frottement présente une couche de combinaison (couche blanche) ayant une épaisseur comprise notamment entre 5 et 50 µm, par exemple 20 µm.
- Le traitement est une cémentation sur une épaisseur comprise entre 0,5 et 4 mm, par exemple 2 mm.
- Au moins l'une des surfaces de frottement comporte des agencements aptes à faire office de réserve de lubrifiant.
- Les agencements comprennent des cavités de section circulaire ou alvéolaire.
- Les cavités sont des macrocavités, qui présentent chacune un diamètre compris entre 2 et 15 mm, par exemple 6 mm.
- Les cavités sont des microcavités, qui présentent chacune une plus grande longueur comprise entre 15 et 100 µm, et une profondeur comprise entre 50 nm et 100 µm.
- Les agencements comprennent des rainures circulaires ou hélicoïdales.
- Les agencements comprennent un quadrillage.
- Les agencements comprennent des chevrons.
- Une même surface peut comporter aménagements de plusieurs types différents, ou d'un seul type.
- Les agencements ont une densité surfacique comprise entre 5 et 65%, cette densité surfacique étant définie comme le ratio de l'aire totale couverte par les agencements sur l'aire totale de ladite zone incluant ces agencements.
- Chaque surface de frottement comporte un traitement ou revêtement de surface présentant des propriétés physiques différentes du matériau de base de la bague et/ou des agencements aptes à faire office de réserve de lubrifiant.
- Au moins l'une des surfaces de frottement comporte à la fois un traitement ou revêtement de surface présentant des propriétés physiques différentes du matériau de base de la bague, et des agencements aptes à faire office de réserve de lubrifiant.
- La bague externe et/ou la bague interne est métallique, par exemple en acier, fonte, aluminium, alliage cuivreux, etc.
- La bague externe et/ou la bague interne est en matériau composite.
- Le composant comprend uniquement deux bagues concentriques, l'interface de frottement étant défini directement entre la surface de frottement interne de la bague externe et la surface de frottement externe de la bague interne.
- Le composant articulé comprend au moins trois bagues concentriques.
- Le composant articulé comprend trois bagues, avec une seule interface de frottement définie entre les trois bagues. Autrement dit, deux bagues sont fixées l'une à l'autre, par exemple par collage, soudage, ou toute autre technique.
- La bague intermédiaire est autolubrifiante. Plus précisément, la surface de frottement externe et/ou la surface de frottement interne de la bague intermédiaire est autolubrifiante.
- La bague intermédiaire comprend un enroulement de bandes de tissu et une résine comprenant des charges, mélangés afin de réaliser un produit homogène, les bandes étant croisées selon plusieurs couches par enroulement filamentaire.
- Le composant articulé comprend trois bagues, avec une interface de frottement définie entre chaque paire de bagues. Autrement dit, les trois bagues sont mobiles les unes par rapport aux autres.
- La bague intermédiaire est métallique.
- La bague intermédiaire est en matériau composite.
- Le composant articulé comprend quatre bagues ou plus.

L'invention a également pour objet un système mécanique, comprenant un composant articulé tel que mentionné ci-dessus, et un élément mobile guidé par le composant en rotation, oscillation et/ou translation.

Le système mécanique comprend quatre surfaces de frottement, à savoir la surface externe de l'axe, et les trois surfaces du composant articulé. La durée de vie du système mécanique est grandement améliorée, en comparaison avec un axe monté dans une bague.

### BREVE DESCRIPTION DES DESSINS

L'invention sera mieux comprise à la lecture de la description qui va suivre, donnée uniquement à titre d'exemple non limitatif et faite en référence aux dessins annexés sur lesquels :
- la figure 1 est une vue en perspective éclatée d'un système mécanique conforme à l'invention, comprenant un axe et un composant articulé constitué de deux bagues et de moyens d'étanchéité ;
- la figure 2 est une vue de côté du composant de la figure 1 ;
- la figure 3 est une vue en perspective du composant de la figure 1 ;
- la figure 4 est une coupe selon la ligne IV-IV à la figure 2 ;
- la figure 5 est une vue à plus grande échelle du détail V à la figure 4 ;
- la figure 6 est une vue en perspective éclatée d'un autre système mécanique conforme à l'invention, comprenant un axe et une variante de composant articulé ;
- les figures 7 à 10 sont des vues analogues aux figures 2 à 5, pour le composant de la figure 6 ;
- les figures 11 et 12 sont des vues analogues aux figures 4 et 5, pour une autre variante de composant, comprenant trois bagues délimitant deux interfaces de frottement entre elles ; et
- les figures 13 et 14 sont des vues analogues aux figures 4 et 5, pour une autre variante de composant, comprenant trois bagues délimitant une unique interface de frottement entre elles.

### EXPOSE DETAILLE DE L'INVENTION

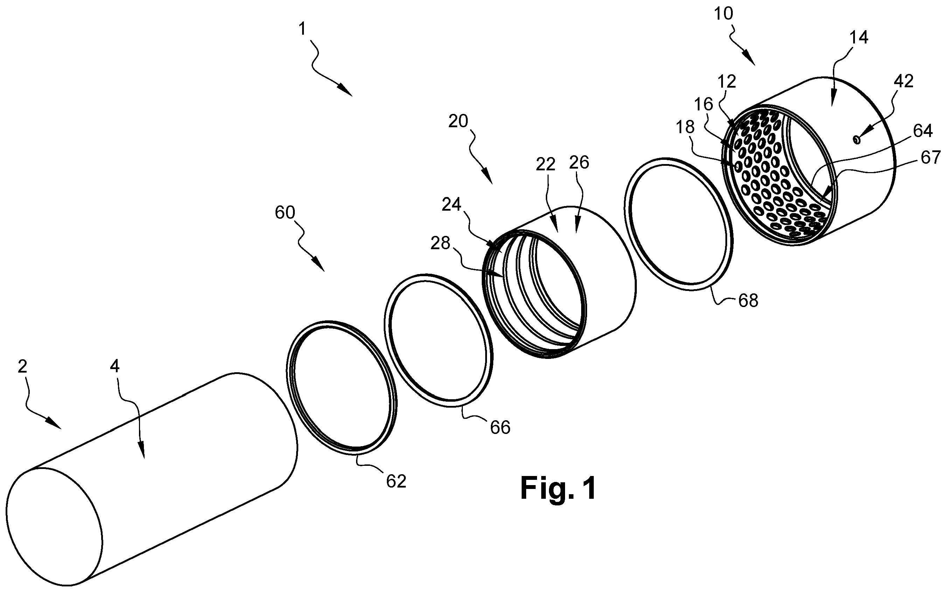

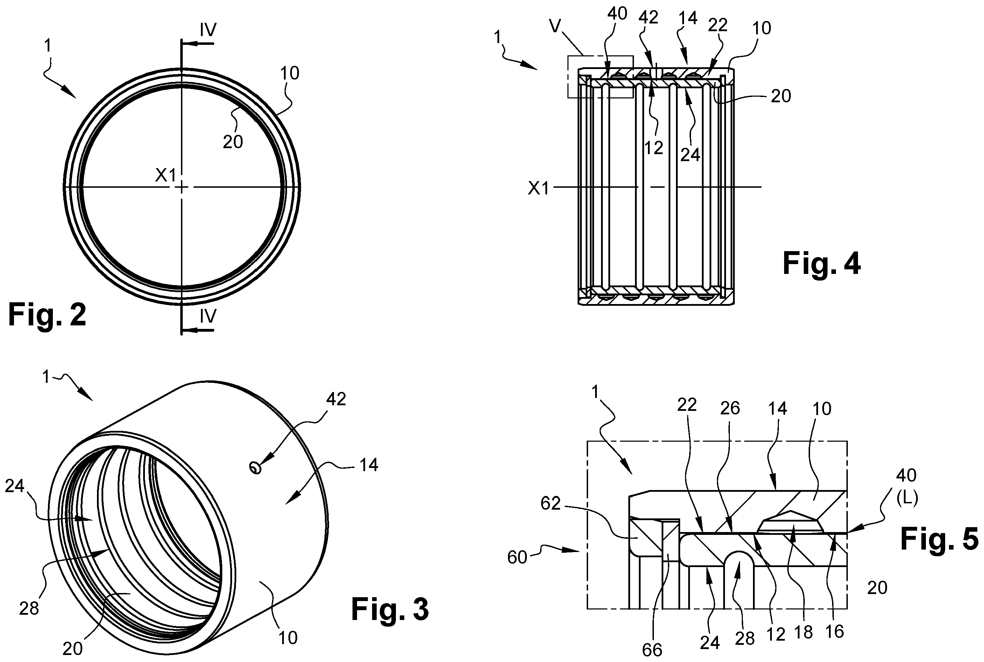

Sur les figures 1 à 5 est représenté un système mécanique conforme à l'invention, comprenant un composant articulé 1 également conforme à l'invention, et un axe 2 monté dans le composant 1. L'axe 2 est guidé par le composant articulé 1 en rotation (pivotement suivant une seule direction, généralement sur plusieurs tours), oscillation (pivotement suivant deux direction alternées, généralement sur une portion de tour) et/ou translation (déplacement suivant la direction axiale).

Le composant articulé 1 comprend deux bagues 10 et 20 concentriques, mobiles l'une par rapport à l'autre en rotation autour d'un axe central X1. Les deux bagues 10 et 20 définissent entre elles une interface de frottement 40 recevant un lubrifiant L, de préférence de la graisse.

Les deux bagues 10 et 20 incluent une bague externe 10 et une bague interne 20. La bague externe 10 a une surface de frottement interne 12 cylindrique, et une surface d'appui externe 14 cylindrique. La bague interne 20 a une surface de frottement externe 22 cylindrique, et une surface de frottement interne 24 cylindrique.

Les surfaces 12 et 22 délimitent l'interface de frottement 40 entre elles, radialement à l'axe central X1. La surface 14 est prévue pour le montage de la bague externe 10 dans un alésage. Un canal 42 est ménagé radialement à travers la bague 10 entre les surfaces 12 et 14, pour lubrifier l'interface 40. La surface 24 est prévue pour recevoir l'axe 2, plus précisément la surface externe cylindrique 4 de l'axe 2. Ainsi, l'axe 2 est guidé par le composant 1 en rotation, oscillation et/ou translation.

Le composant 1 comprend des moyens d'étanchéité 60 conçus pour empêcher des fuites de lubrifiant L hors de l'interface de frottement 40. Le composant 1 constitue ainsi une structure étanche lubrifiée. La rotation relative entre les bagues 10 et 20 est donc grandement facilitée, et le risque de grippage est réduit.

Les moyens d'étanchéité 60 comprennent des éléments latéraux 62, 64, 66 et 68 limitant le débattement axial de la bague interne 20 par rapport à la bague externe 10. Plus précisément, les moyens d'étanchéité 60 comprennent une flasque 62 et une rondelle 66 sur un premier côté de l'interface 40, et un épaulement 64 et une rondelle 68 sur un deuxième côté de l'interface de frottement 40. Les éléments 62, 64, 66 et 68 sont annulaires et centrés sur l'axe X1. L'épaulement 64 appartient à la bague 10. Les éléments 62, 66 et 68 sont distincts des bagues 10 et 20. La rondelle 68 est montée dans une gorge 67 formée dans la bague 10, contre l'épaulement 64. Les éléments 62 et 66 sont montés dans un logement 61 prévu à cet effet dans la bague 10, à l'opposé de l'épaulement 64.

En alternative, les moyens d'étanchéité 60 peuvent comprendre deux flasques amovibles montés sur les côtés opposés du composant 1.

Le composant 1 est non-rotulé, autrement dit ne constitue pas une rotule. Le composant 1 assemblé présente un unique degré de liberté, à savoir la liaison pivot entre les bagues 10 et 20 autour de l'axe central X1. Les bagues 10 et 20 sont mobiles librement en rotation l'une par rapport à l'autre autour de l'axe X1, mais ne sont pas mobiles librement selon les autres degrés de liberté, en translation et rotation.

Les surfaces de frottement 12 et 22 peuvent être cylindriques.

En alternative, les surfaces 12 et 22 peuvent être légèrement bombées. Autrement dit, les surfaces 12 et 22 sont des surfaces de révolution, à section circulaire et génératrice elliptique ou parabolique. La courbure de chaque surface 12 et 22 (considérée dans un plan radial comprenant l'axe X1) présente un rayon toujours supérieur au rayon (considéré dans un plan transversal à l'axe X1) de l'interface de frottement 40.

De préférence, au moins l'une des surfaces de frottement 12 / 22 / 24 comporte un traitement ou revêtement de surface présentant des propriétés physiques différentes du matériau de base de la bague 10 / 20 correspondante.

Encore de préférence, au moins l'une des surfaces de frottement 12 / 22 / 24 comporte des agencements aptes à faire office de réserve de lubrifiant L.

Toujours de préférence, chaque surface de frottement 12 / 22 / 24 comporte un traitement ou revêtement de surface présentant des propriétés physiques différentes du matériau de base de la bague 10 / 20 ; et/ou des agencements aptes à faire office de réserve de lubrifiant L.

A titre d'exemple non limitatif :
- les bagues 10 et 20 sont en acier ;
- la surface 12 subit un traitement de nitruration et présente une couche externe 16 d'acier nitruré, avec une couche de combinaison (couche blanche) ayant une épaisseur de l'ordre de 20 µm ;
- la surface 12 comporte des agencements 18 en forme de cavités de section circulaire, régulièrement réparties autour de l'axe central X1, aptes à faire office de réserve de lubrifiant L à l'interface 40 entre les bagues 10 et 20 ;
- la surface 22 est revêtue d'une couche externe 26 de carbone amorphe type DLC, ayant une épaisseur de l'ordre de 3 µm, avec ou sans sous-couche (composée par exemple de chrome ou de nitrure de chrome) ; et
- la surface 24 comporte des agencements 28 en forme de rainures circulaires, enroulées autour de l'axe central X1 et régulièrement espacées le long de l'axe central X1, aptes à faire office de réserve de lubrifiant L à l'interface entre la bague 20 et l'axe 2.

L'invention permet de proposer un composant articulé 1 résistant, peu encombrant et simple à mettre en œuvre. Le composant 1 comprenant deux bagues 10 et 20 présente une durée de vie améliorée, en comparaison avec un composant constitué d'une unique bague, et présentant des dimensions et un encombrement similaires.

Dans le cas d'une unique bague d'articulation, l'usure est généralement localisée sur un secteur angulaire s'étendant sur 1/3 de la circonférence. Dans le cas de l'invention, la bague interne 10 tourne par rapport à la bague externe 20, ce qui augmente fortement la surface d'usure potentielle, et donc la durée de vie du composant.

En pratique, on constate que l'interface de frottement 40 entre les deux bagues 10 et 20 est sollicitée en priorité. Les surfaces de frottement 12 et 22 en regard remplissent la fonction de surfaces d'usure principales. Lorsque cette interface 40 est grippée, la surface de frottement interne 24 de la bague interne 20 en contact avec la surface 4 de l'axe 2 prend le relai comme surface d'usure.

Le composant 1 présente trois surfaces de frottement 12, 22 et 24 formant trois surfaces d'usure, pouvant être pourvues de traitement, revêtement et/ou agencements. Ainsi, l'invention offre une plus grande maîtrise dans la conception du composant 1, permettant d'adapter sa résistance à l'usure à chaque application.

Le système mécanique comprend quatre surfaces de frottement, à savoir la surface externe 4 de l'axe 2, et les surfaces 12, 22 et 24 du composant 1. La durée de vie du système mécanique est grandement améliorée, en comparaison avec un axe monté dans une unique bague.

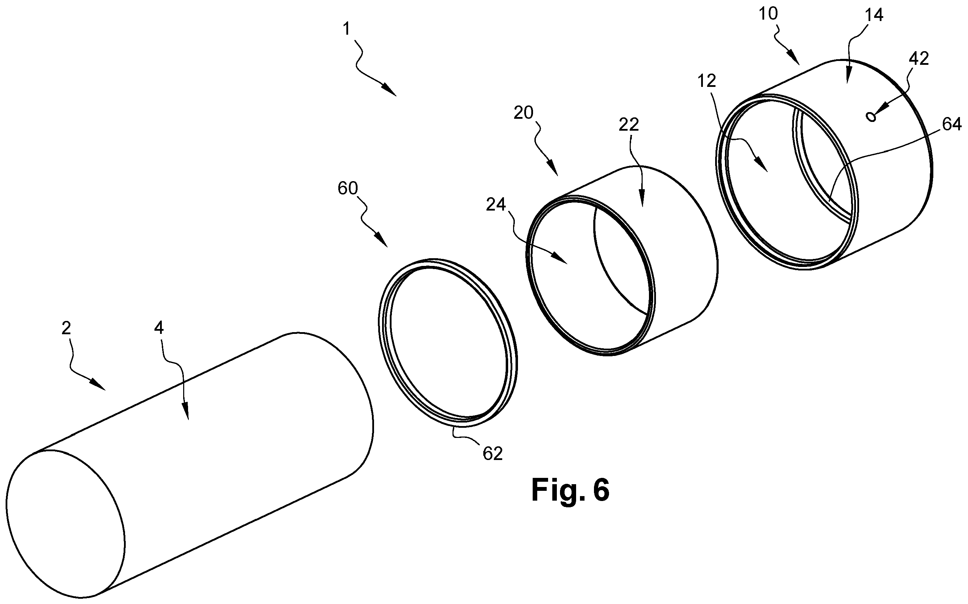

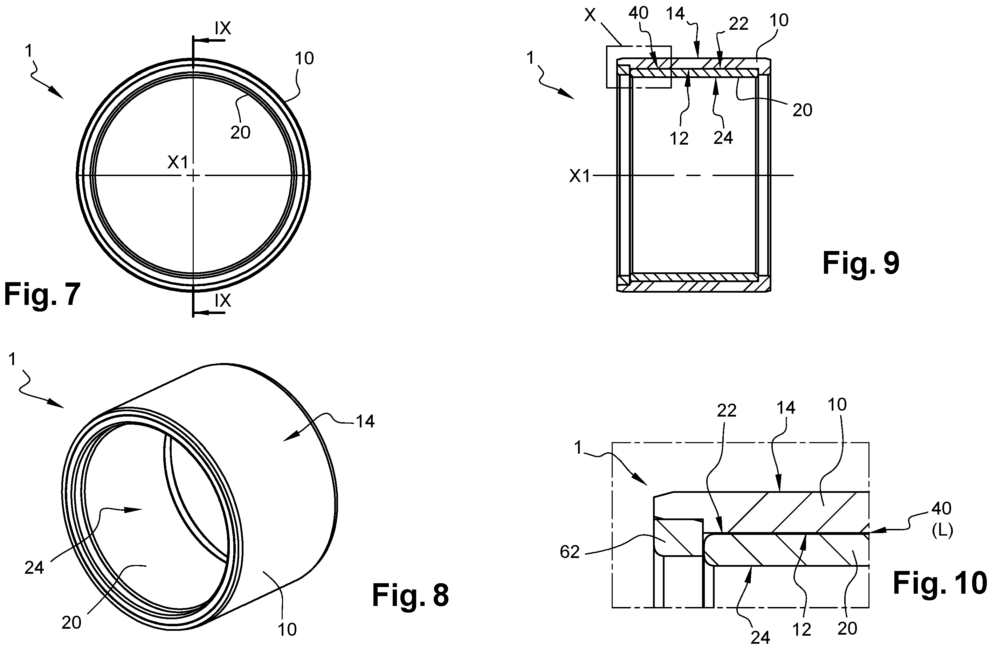

D'autres variantes de composants articulés 1 conformes à l'invention sont montrées aux figures 6 à 14. Certains éléments constitutifs du composant 1 sont comparables à ceux du premier mode de réalisation décrit plus haut et, dans un but de simplification, portent les mêmes références numériques.

Les figures 6 à 10 montrent un autre système mécanique conforme à l'invention, comprenant une variante de composant 1 et un axe 2 monté dans le composant 1. Les surfaces de frottement 12 / 22 / 24 sont dépourvues de traitement ou revêtement de surface, et d'agencements réservoirs de lubrifiant L. Les moyens d'étanchéité 60 comprennent une flasque 62 et un épaulement 64, sur les côtés opposés de l'interface 40. Ainsi, le composant 1 est plus simple et moins coûteux à fabriquer que dans le premier mode de réalisation. Malgré l'absence de traitement, revêtement ou agencements, le composant 1 comprenant deux bagues 10 et 20 présente une durée de vie améliorée, en comparaison avec un composant constitué d'une unique bague, et présentant des dimensions et un encombrement similaires.

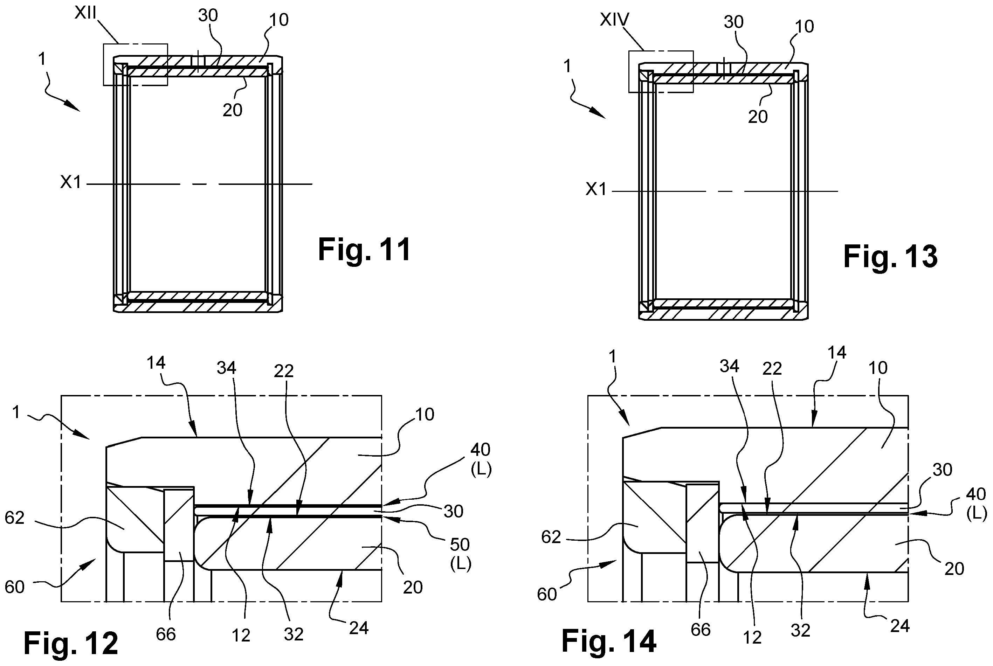

Les figures 11 et 12 montrent une variante de composant articulé 1, comprenant trois bagues 10, 20 et 30 concentriques, mobiles l'une par rapport à l'autre. La bague 30 est située entre les bagues 10 et 20. Une première interface de frottement 40 est définie entre les bagues 10 et 30. Une seconde interface de frottement 50 est définie entre les bagues 20 et 30. Le composant 1 présente cinq surfaces de frottement 12, 22, 24, 32 et 34 formant cinq surfaces d'usure, pouvant être pourvues de traitement, revêtement et/ou agencements.

Les figures 13 et 14 montrent une variante de composant articulé 1, comprenant trois bagues 10, 20 et 30 concentriques. La bague 30 est située entre les bagues 10 et 20. Les bagues 20 et 30 sont mobiles l'une par rapport à l'autre, et définissent une interface de frottement 50 entre elles. La bague 30 est fixée à la bague 10, par exemple par collage. La bague 30 peut être constituée d'un enroulement de bandes de tissu et d'une résine comprenant des charges, mélangés afin de réaliser une bague homogène, les bandes étant croisées selon plusieurs couches par enroulement filamentaire. Le composant 1 présente trois surfaces de frottement 22, 24 et 32 formant trois surfaces d'usure, pouvant être pourvues de traitement, revêtement et/ou agencements.

Par ailleurs, le composant articulé 1 peut être conformé différemment des figures 1 à 14 sans sortir du cadre de l'invention. En outre, les caractéristiques techniques des différentes variantes mentionnées ci-dessus peuvent être, en totalité ou pour certaines d'entre elles, combinées entre elles. Ainsi, le composant 1 peut être adapté en termes de coût, de fonctionnalités et de performance.

Les Tableaux 1 à 5 ci-après présentent une série d'essais, permettant de comparer deux bagues de références (bague unique recevant un axe) et différents modes de réalisation de l'invention.

**Tableau 1 - Paramètres et conditions d'essais**

| Banc | Banc d'essai Grande Oscillation |
|---|---|
| Loi de Mouvement | Oscillation axe sinusoïdale |
| Amplitude d'oscillation | 100° |
| Pression projetée | 90 MPa |
| V moyenne sur une oscillation | 0,0079 m/s |
| PV moyen | 0,7 MPa.m/s |
| Graisse (type) | Graisse Extrême Pression |
| Graissage | Initial uniquement |

| Matière des bagues | Acier |
|---|---|
| Matière de l'axe | Acier 16NC6 Cémenté Trempé |
| | COF > 0,35 |
| Critère d'arrêt | T° > 120°C |
| | Usure > 0,5mm |

**Tableau 2 - Montée en pression au démarrage d'un essai**

| Pression | 10 MPa | 30 Mpa | 60 MPa | 80 Mpa | 90 Mpa |
|---|---|---|---|---|---|
| Nombre de cycles | 100 | 100 | 100 | 200 | 500 000 |

**Tableau 3 - Améliorations prévues sur les surfaces de frottement des bagues**

| Désignation | Caractéristiques de l'amélioration |
|---|---|
| AM1 | La surface de frottement interne présente des agencements, en forme de cavités de section circulaire régulièrement réparties autour de l'axe central, faisant office de réserve de lubrifiant. |
| AM2 | La surface de frottement interne reçoit un traitement de nitruration et présente une couche de combinaison (couche blanche) ayant une épaisseur de l'ordre de 20 µm. |
| AM3 | La surface de frottement interne comporte un revêtement de vernis polymère. |
| AM4 | La surface de frottement externe est revêtue d'une couche externe de carbone amorphe type DLC, ayant une épaisseur de l'ordre de 3 µm. |
| AM5 | La surface de frottement intérieure présente des agencements, en forme de rainures circulaires enroulées autour de l'axe central et régulièrement espacées le long de l'axe central, faisant office de réserve de lubrifiant. |
| Bague 30 | Une bague intermédiaire 30 en composite autolubrifiant est collée sur la surface interne de la bague externe 10. |

**Tableau 4 - Résultats d'essais - Bagues simples**

| Référence | AM1 | AM2 | AM3 | Nombre de cycles effectués |
|---|---|---|---|---|
| B1 | non | non | non | 1 500 |
| B2 | oui | oui | oui | 125000 |

**Tableau 5 - Résultats d'essai - Composants conformes à l'invention**

| | Bague externe 10 Surface interne 12 | | | Bague interne 20 | | Bague intermédiaire 30 | |
|---|---|---|---|---|---|---|---|
| Référence composant 1 | AM1 | AM2 | AM3 | AM4 Surface 22 | AM5 Surface 24 | | Nombre de cycles effectués |
| C-BH1 | non | non | non | non | non | non | 7 000 |
| C-BH2 | oui | oui | oui | non | non | non | 350 000 |
| C-BH3 | oui | oui | oui | oui | non | non | 410 000 |
| C-BH4 | oui | oui | oui | oui | oui | non | 530 000 |
| C-BH5 | oui | oui | non | oui | oui | oui | > 500 000 |

Les résultats de la série d'essais permettent de faire les observations suivantes :

| | |
|---|---|
| - | Le composant C-BH1 a tenu un nombre de cycles équivalent à 4,6 fois la bague B1. |
| - | Le composant C-BH2 " " " 3,6 fois la bague B2. |
| - | Le composant C-BH3 " " " 4 fois la bague B2. |
| - | Le composant C-BH4 " " " 4,6 fois la bague B2. |
| - | L'essai réalisé pour le composant C-BH5 a été volontairement arrêté à 500 000 cycles. Sa durée de vie est bien supérieure à celle de la bague B2. |

Ainsi, l'invention permet de proposer un composant articulé 1 résistant, peu encombrant et simple à mettre en œuvre. Le composant 1 comprenant plusieurs bagues présente une durée de vie améliorée, en comparaison avec un composant constitué d'une unique bague, et présentant des dimensions et un encombrement similaires.

## Revendications

1. Composant articulé (1) à un degré de liberté, comprenant uniquement deux bagues (10, 20) concentriques métalliques, mobiles en rotation l'une par rapport à l'autre autour d'un axe central (X1), définissant une interface de frottement (40) entre elles, et incluant :
- une bague externe (10) ayant une surface cylindrique de frottement interne (12), et
- une bague interne (20) ayant une surface cylindrique de frottement externe (22) et une surface cylindrique de frottement interne (24) prévue pour recevoir un élément mobile (2) guidé par le composant (1) en rotation, oscillation et/ou translation.
l'interface de frottement (40) étant défini directement entre la surface cylindrique de frottement interne (12) de la bague externe (10) et la surface cylindrique de frottement externe (22) de la bague interne (20), ladite interface de frottement (40) reçoit un lubrifiant (L) ;
la surface cylindrique de frottement interne (12) de la bague externe (10) et la surface cylindrique de frottement interne (24) de la bague interne (20) comportent un traitement ou revêtement (16 ; 26) de surface présentant des propriétés physiques différentes du matériau de base de la bague et des agencements (18 ; 28) aptes à faire office de réserve de lubrifiant (L) ;
le composant (1) comprend des moyens d'étanchéité (60) conçus pour empêcher des fuites de lubrifiant (L) hors de l'interface de frottement (40) et limiter le débattement axial de la bague interne (20) par rapport à la bague externe (10), lesdits moyens d'étanchéité (60) comprennent un flasque (62) et une rondelle (66) sur un premier côté de l'interface (40), et un épaulement (64) ou un flasque et une rondelle (68) sur un deuxième côté de l'interface de frottement (40), les rondelles (66, 68) étant interposées entre la bague interne (20) d'une part, et le flasque ou l'épaulement d'autre part.

2. Système mécanique, comprenant un composant articulé (1) selon la revendication 1, et un élément mobile (2) guidé par le composant (1) en rotation, oscillation et/ou translation.

## Patentansprüche

1. Gelenkbauteil (1) mit einem Freiheitsgrad, das ausschließlich zwei konzentrische metallische Ringe (10, 20) umfasst, die relativ zueinander um eine Mittelachse (X1) drehbeweglich sind, zwischen sich eine Reibungsgrenzfläche (40) definieren und Folgendes umfassen:
- einen Außenring (10) mit einer zylindrischen inneren Reibungsfläche (12), und
- einen Innenring (20) mit einer zylindrischen äußeren Reibungsfläche (22) und einer zylindrischen inneren Reibungsfläche (24), die dazu bestimmt ist, ein bewegliches Element (2) aufzunehmen, das durch das Bauteil (1) in Rotation, Oszillation und/oder Translation geführt wird,
wobei die Reibungsgrenzfläche (40) unmittelbar zwischen der zylindrischen inneren Reibungsfläche (12) des Außenrings (10) und der zylindrischen äußeren Reibungsfläche (22) des Innenrings (20) definiert ist, wobei die Reibungsgrenzfläche (40) ein Schmiermittel (L) aufnimmt;
wobei die zylindrische innere Reibungsfläche (12) des Außenrings (10) und die zylindrische innere Reibungsfläche (24) des Innenrings (20) eine Oberflächenbehandlung oder Beschichtung (16; 26) mit physikalischen Eigenschaften, die sich von denen des Grundmaterials des Rings unterscheiden, sowie Anordnungen (18; 28) umfassen, die geeignet sind, als Reservoir für das Schmiermittel (L) zu wirken;
wobei das Bauteil (1) Dichtungsmittel (60) umfasst, die dazu ausgelegt sind, ein Austreten des Schmiermittels (L) aus der Reibungsgrenzfläche (40) zu verhindern und das axiale Spiel des Innenrings (20) relativ zum Außenring (10) zu begrenzen, wobei die Dichtungsmittel (60) auf einer ersten Seite der Reibungsgrenzfläche (40) einen Flansch (62) und eine Unterlegscheibe (66) und auf einer zweiten Seite der Reibungsgrenzfläche (40) eine Schulter (64) oder einen Flansch und eine Unterlegscheibe (68) umfassen, wobei die Unterlegscheiben (66, 68) jeweils zwischen dem Innenring (20) einerseits und dem Flansch bzw. der Schulter andererseits angeordnet sind.

2. Mechanisches System, umfassend ein Gelenkbauteil (1) nach Anspruch 1 und ein bewegliches Element (2), das durch das Bauteil (1) in Rotation, Oszillation und/oder Translation geführt wird.

## Claims

1. Articulated component (1) with one degree of freedom, comprising only two concentric metallic rings (10, 20), movable in rotation relative to one another about a central axis (X1), defining a friction interface (40) between them, and including:
- an outer ring (10) having a cylindrical inner friction surface (12), and
- an inner ring (20) having a cylindrical outer friction surface (22) and a cylindrical inner friction surface (24) intended to receive a movable element (2) guided by the component (1) in rotation, oscillation and/or translation.
the friction interface (40) being defined directly between the cylindrical inner friction surface (12) of the outer ring (10) and the cylindrical outer friction surface (22) of the inner ring (20), said friction interface (40) receiving a lubricant (L);
the cylindrical inner friction surface (12) of the outer ring (10) and the cylindrical inner friction surface (24) of the inner ring (20) comprise a surface treatment or coating (16; 26) having physical properties different from the base material of the ring and arrangements (18; 28) capable of acting as a reservoir for lubricant (L);
the component (1) comprises sealing means (60) designed to prevent lubricant (L) leaks out of the friction interface (40) and to limit the axial play of the inner ring (20) relative to the outer ring (10), said sealing means (60) comprising a flange (62) and a washer (66) on a first side of the interface (40), and a shoulder (64) or a flange and a washer (68) on a second side of the friction interface (40), the washers (66, 68) being interposed between the inner ring (20) on the one hand, and the flange or the shoulder on the other hand.

2. Mechanical system, comprising an articulated component (1) according to claim 1, and a movable element (2) guided by the component (1) in rotation, oscillation and/or translation.
